# EUROPEAN PATENT SPECIFICATION

(11) **EP 1 223 820 B1**
(45) Date of publication and mention of the grant of the patent: **29.09.2004**
(21) Application number: 00950179.2
(22) Date of filing: 24.07.2000
(51) Int. Cl.: A23N 1/02

(54) **METHOD FOR THE PRODUCTION OF JUICE FROM FRUITS SUCH AS POMEGRANATES**
VERFAHREN ZUR HERSTELLUNG VON SAFT AUS FRÜCHTEN WIE GRANATAPFELN
PROCEDE DE PRODUCTION DE JUS DE FRUITS TELS QUE LES GRENADES

(30) Priority: 27.07.1999 SE 9902804
(43) Date of publication of application: 24.07.2002
(73) Proprietor: Tetra Laval Holdings & Finance SA, 1009 Pully (CH)
(72) Inventor: ARNFJÄRD, Kaj, S-245 63 Hjärup (SE); JOHNSSON, Bo, S-223 61 Lund (SE)
(74) Representative: Forsberg, Lars-Ake
(86) International application number: PCT/SE2000/001512
(87) International publication number: WO 2001/006878

(56) References cited:
- US-A- 2 172 790
- US-A- 4 438 690

## Description

### TECHNICAL FIELD

The present invention relates to a method for the production of juice from fruits such as pomegranates, comprising the method steps of fragmenting the fruit and extracting the juice sacs of the fruit, and pressing of the juice sacs for obtaining a fruit juice.

### BACKGROUND ART

Pomegranates are a fruit which is harvested from bushes or small trees and is cultivated in sub-tropical or tropical areas. The fruit, which is round, has a dry, hard and rufous to yellow skin. Inside, there are several cavities in two or more layers. In each cavity there is a large number of juice sacs containing juice and a seed or a kernel. The juice sacs have long been used widely in cooking. The juice sacs are also pressed and the scarlet juice is used as a drink or as a flavouring in drinks or in cooking. In many cultures, the juice from pomegranates is highly appreciated as a refreshing and healthy drink.

In all production of juice from different fruits, particular consideration must be paid to the properties and structure of the pertinent fruit. When it is the intention to extract juice from pomegranates, care must be taken to ensure that no parts of the skin and inner partitions accompany the sacs and are pressed at the same time as the juice sacs. The skin and inner partitions contain large quantities of polyphenols such as punicalagin and punicalin which have a manifest bitter and astringent taste. In the production of the flavouring known as grenadine from pomegranates, use is made to some degree of the bitter taste, but as regards juice extraction, the intention is to include as little as possible of these bitter flavourings.

Juice has long been produced on a small scale by manual separation of the juice sacs from the skin and inner partitions. The juice sacs are then pressed in some form of silk screen. There is also equipment for the industrial production of juice from pomegranates, but the problem is to be able, in an efficient and rapid manner, to extract the juice sacs without including parts of the skin or inner partitions. Some existing equipment suffers from problems inherent in the overly large admixture of parts containing the undesirable bitter flavourings.

### OBJECT OF THE INVENTION

One object of the present invention is to realise a method for producing juice from pomegranates, in which the fruit is treated in an efficient manner without being subjected to such mechanical action that parts of the skin and the inner partitions accompany the juice sacs and in the later pressing of juice give rise to the bitter flavourings which are included in the skin and inner partitions, giving an undesirable flavour to the finished juice.

### SOLUTION

This and other objects have been attained according to the present invention in that the method of the type described by way of introduction has been given the characterising feature that the fragmented fruits, in a rotating drum, are caused to fall from the upper region of the drum to its bottom, where the fruit sacs depart from the drum via perforations in the circumferential surface of the drum, while the remaining parts of the fruit are discharged out from the short side of the drum.

Preferred embodiments of the present invention have further been given the characterising features as set forth in the appended subclaims.

### BRIEF DESCRIPTION OF THE ACCOMPANYING DRAWING

One preferred embodiment of the present invention will now be described in greater detail hereinbelow, with particular reference to the accompanying Drawing. In the accompanying Drawing:
Fig. 1 shows a pomegranate in cross section; and
Fig. 2 schematically shows an apparatus for carrying the method into effect.

### DESCRIPTION OF PREFERRED EMBODIMENT

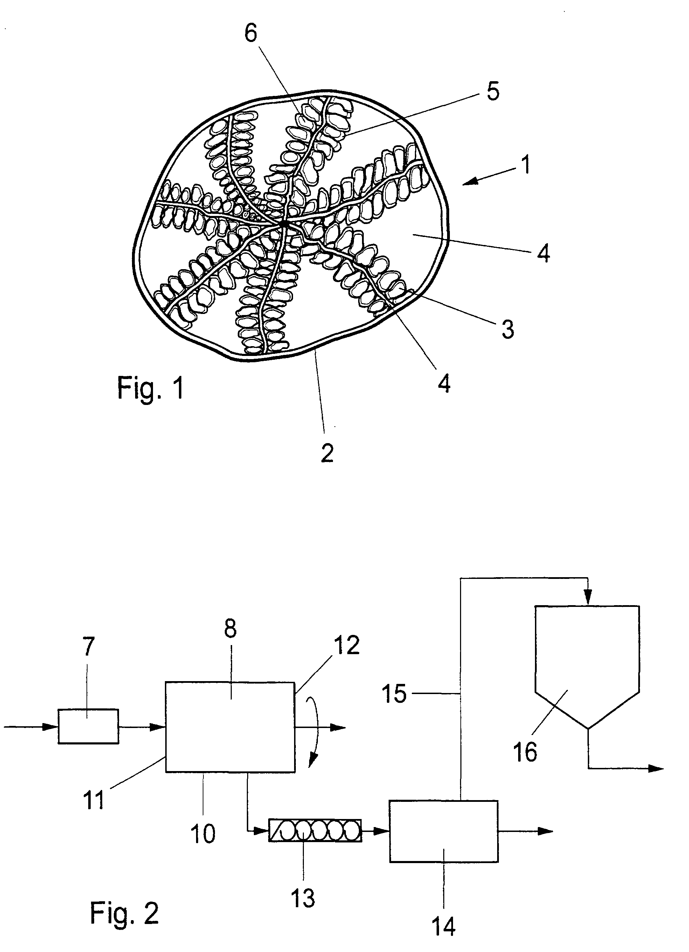

Fig. 1 shows a fruit 1 of pomegranate cut in half. The fruit 1 has a surrounding skin 2 which is relatively hard and brittle. Within the fruit 1, there are a number of chambers 3 which are divided off by inner partitions 4. In each one of the chambers 3, there is a large number of juice sacs 5. The juice sacs 5 are held together by a relatively tough membrane and contain a scarlet juice and a kernel or seed 6.

The skin 2 and the inner partitions 4 contain large quantities of polyphenols which have an extremely manifest bitter taste. The juice and the kernels 6 in the juice sacs 5 contain only minor quantities of these bitter substances. In order to be able to extract the juice in a desirable manner, the intention is thus to separate the juice sacs 5 from the skin 2 and the inner partitions 4 so that no parts of these accompany the sacs and impart an overly bitter taste to the extracted juice.

Fig. 2 shows, in a schematic flow diagram, how the method is formulated. Pomegranate fruits 1 are conveyed into the apparatus to a first workstation 7 where the fruits 1 are fragmented. Depending upon their degree of maturity and quality, the fruits 1 may be halved or cut into thick slices. The fruits 1 should be fragmented as little as possible in order to avoid the bitter substances from being released. After fragmentation, the fragmented fruits 1 are conveyed further to a rotating drum 8. The drum 8 has a number of carriers secured on its inner wall. The carriers may be straight, but in the preferred embodiment, they are slightly oblique. The circumferential surface 10 of the drum 8 is perforated with a large number of holes. The holes have a diameter of approximately 15 mm. The rotation of the drum 8 is relatively moderate, at most 30 rpm, and depends upon the diameter of the drum 8 so that a larger diameter will give a slower rotation.

The fragmented fruits 1 are fed into the drum 8 via its one short side 11. As a result of the rotation of the drum 8, the fruit fragments are moved by the carriers towards the upper region of the drum 8. When the carriers can no longer hold the fruit fragments, these will fall down towards the bottom of the drum 8. The fruit fragments are broken up and the juice sacs 5 which are of a size of approximately 5-10 mm fall through the holes in the circumferential surface 10 of the drum 8. The more or less intact parts of skin 2 and inner partitions 4 remain in the drum 8. As a result of the oblique carriers, the remaining parts of the fruit 1 are moved forwards in the drum 8 and depart from the drum 8 through its other short side 12.

The juice sacs 5 extracted from the fruit 1 and having left the drum 8 through the perforation holes are conveyed further in some form of conventional screw 13 or on a conveyor belt. The juice sacs 5 are fed by means of the screw 13 or the conveyor belt to some form of straining machine 14 or possibly a mill and a decanter. Other types of equipment for pressing the juice sacs 5 may also be employed in connection with the method according to the present invention. In the straining machine 14, the juice sacs 5 are pressed under counter pressure against a fine mesh net and the juice sacs 5 are emptied of their juice contents. Kernels 6 and membranes are conveyed off from the straining machine 14 and the pressed juice is pumped into a conduit 15 and further to a tank 16, or possibly direct to after treatment and packing in consumer packages. Alternatively, the juice may be concentrated after extraction in order to be able to be transported further where the concentrate can be employed in the production of other juices or food products.

As will have been apparent from the foregoing description, the present invention realises a method for the production of juice from fruits such as pomegranates. The method permits an efficient and gentle separation of the juice sacs of the fruit from skin and inner partitions. The method makes it possible to industrially extract juice from pomegranates without the mechanical processing of the fruit being too accentuated, so that the bitter substances in the skin and inner partitions accompany the finished juice.

## Claims

1. A method for the production of juice from fruits (1) such as pomegranates, comprising the method steps of fragmenting the fruit (1) and extracting the juice sacs (5) of the fruit (1), and pressing of the juice sacs (5) for obtaining a fruit juice, **characterised in that** the fragmented fruits (1) are caused, in a rotating drum (8), to fall from the upper region of the drum (8) to its bottom where the juice sacs depart from the drum (8) via perforations in the circumferential surface (10) of the drum (8), while the remaining parts of the fruit (1) are discharged out from the short side (12) of the drum (8).

2. The method as claimed in Claim 1, **characterised in that** carriers secured in the interior of the drum (8) bring the fragmented fruits (1) up to the upper region of the drum (8).

3. The method as claimed in Claim 1, **characterised in that** the carriers, by being oblique, move the remaining parts of the fruit (1) forward in the drum (8) towards its short side (12).

4. The method as claimed in Claim 1, **characterised in that** the perforations in the circumferential surface (10) of the drum (8) consist of a large number of holes of a diameter of approximately 15 mm.

5. The method as claimed in Claim 1, **characterised in that** the rotation of the drum (8) is a maximum of 30 rpm.

## Patentansprüche

1. Verfahren zur Herstellung von Saft aus Früchten (1) wie Granatäpfeln, bei dem man die Frucht (1) zerlegt, die Saft haltigen Samenhüllen (5) der Frucht (1) entfernt und die Saft haltigen Samenhüllen (5) zum Erhalt eines Fruchtsafts presst, **dadurch gekennzeichnet, dass** dafür gesorgt wird, dass die zerlegten Früchte (1) in einer sich drehenden Trommel (8) von einem oberen Bereich der Trommel (8) auf ihren Boden fallen, wo die Saft haltigen Samenhüllen die Trommel (8) über Perforationen in der Umfangsfläche (10) der Trommel (8) verlassen, während die restlichen Teile der Frucht (1) aus der kurzen Seite (12) der Trommel (8) ausgetragen werden.

2. Verfahren nach Anspruch 1, **dadurch gekennzeichnet, dass** die zerlegten Früchte (1) durch im Innern der Trommel (8) befestigte Träger in den oberen Bereich der Trommel (8) gebracht werden..

3. Verfahren nach Anspruch 1, **dadurch gekennzeichnet, dass** die Träger aufgrund der Tatsache, dass sie schräg sind, die restlichen Teile der Frucht (1) in der Trommel (8) nach vorne zu ihrer kurzen Seite (12) hin bewegen.

4. Verfahren nach Anspruch 1, **dadurch gekennzeichnet, dass** die Perforationen in der Umfangsfläche (10) der Trommel (8) aus einer großen Zahl von Löchern mit einem Durchmesser von ungefähr 15 mm bestehen.

5. Verfahren nach Anspruch 1, **dadurch gekennzeichnet, dass** die Trommel (8) eine Drehzahl von höchstens 30 UpM hat.

## Revendications

1. Procédé de production de jus à partir de fruits (1) tels que des grenades, comprenant les étapes de procédé consistant à fragmenter les fruits (1) et à extraire les sacs de jus (5) des fruits (1) et à presser les sacs de jus (5) pour obtenir un jus de fruit, **caractérisé en ce que** les fruits fragmentés (1) sont amenés, dans un tambour rotatif (8), à tomber depuis la région supérieure du tambour (8) jusqu'au fond où les sacs de jus quittent le tambour (8) par le biais de perforations dans la surface circonférentielle (10) du tambour (8), tandis que les parties restantes des fruits (1) sont déchargées par le côté court (12) du tambour (8).

2. Procédé selon la revendication 1, **caractérisé en ce que** des supports fixés à l'intérieur du tambour (8) amènent les fruits fragmentés (1) jusqu'à la région supérieure du tambour (8).

3. Procédé selon la revendication 1, **caractérisé en ce que** les supports, du fait de leur oblicité, déplacent les parties restantes des fruits (1) vers l'avant dans le tambour (8) en direction de son côté court (12).

4. Procédé selon la revendication 1, **caractérisé en ce que** les perforations dans la surface circonférentielle (10) du tambour (8) sont constituées d'un grand nombre de trous d'un diamètre d'environ 15 mm.

5. Procédé selon la revendication 1, **caractérisé en ce que** la rotation du tambour (8) s'effectue à un maximum de 30 t/min.
